# EUROPEAN PATENT SPECIFICATION

(11) **EP 4 528 157 B1**
(45) Date of publication and mention of the grant of the patent: **18.11.2026**
(21) Application number: 23198461.8
(22) Date of filing: 20.09.2023
(51) Int. Cl.: F23D 14/06

(54) **AN IMPROVED COMPONENT OF A GAS BURNER AND METHOD OF MANUFACTURING THE SAME**
VERBESSERTE KOMPONENTE EINES GASBRENNERS UND VERFAHREN ZU DEREN HERSTELLUNG
COMPOSANT AMÉLIORÉ D'UN BRÛLEUR À GAZ ET PROCÉDÉ DE FABRICATION DU COMPOSANT

(43) Date of publication of application: 26.03.2025
(73) Proprietor: E.G.O. Elektro-Gerätebau GmbH, 75038 Oberderdingen (DE)
(72) Inventor: THIMM, Wolfgang, 75038 Oberderdingen (DE); GINEVRI, Andrea, 60021 Camerano (AN) (IT)
(74) Representative: Braidotti, Andrea

(56) References cited:
- EP-A2- 0 950 854
- WO-A2-2007/079298
- WO-A2-2011/088250

## Description

### FIELD OF INVENTION

The present invention relates to a component of a gas burner, such as for example a cover of a gas burner, and/or relates to an item for a gas burner, in particular to be placed over and/or in proximity of a gas burner, such as for example a pan support or other cooking vessels.

The present invention relates also to a method for producing a component of a gas burner and/or to an item to be placed over and/or in proximity of a gas burner.

### STATE OF THE ART - PRIOR ART

Known burners commonly comprise an injector(s) holder, a base positioned on the injector(s) holder and a cover (called also "lid" or "cap") positioned on the base and defining with it a chamber for mixing and distributing the air-gas mixture.

The injector(s) holder is commonly made of die-cast aluminum and is provided with means for its fastening to the hob; moreover, on the injector(s) holder are mounted one or more injectors, that can be vertically or horizontally aligned and that are fluidically connected with one or more gas supply inlets.

Also, the base is commonly made of die-cast aluminum and is usually provided with one or more ducts for transferring the air-gas mixture to a corresponding distribution chamber that is closed on the top by the cover.

On the outer edge of the base a plurality of main and/or secondary doors are obtained for the generation of a group of flames suitable for heating the cooking vessels placed above the burner itself. Indeed, the base may also act as flame-spreader.

In some known solutions the base is made of brass.

The cover is commonly formed as a molded part, in particular is made of casting iron, that is provided with an enameling coating for an easier cleaning.

In some known solutions the cover is made of brass or is stamped from a metal sheet, for example from an aluminum sheet.

The above-mentioned known materials used for making the components of the gas burner, and in particular for making the cover, have high properties in terms of thermal stress and thermal shock resistance. More in detail, in correspondence of the flames, a stability to a temperature of about 800°C needs to be maintained.

Moreover, such materials also have a certain mechanical stability and tolerance, and also a certain electrical conductivity, so as to generate the spark to ignite the gas flame.

Furthermore, such materials need to be washable, even suitable to be washed in a dishwasher.

Even if highly appreciated, the known components of a gas burner, and in particular the covers made of casting iron with enameling coating, have limited design options.

Some known alternative materials for making the covers of a gas burner are glass ceramic, such as LAS (Lithium - Aluminum - Silicate) ceramic that have quite high thermal resistance, or ceramics, for example, based on cordierite.

However, LAS glass ceramic contains lithium, and this element is now needed on a large scale for electric cars or their batteries.

WO2014/027270 discloses an easy-to-clean and correspondingly aesthetic vitro-ceramic burners and/or pan supports.

WO2007/079298 discloses a method for forming a layered heating element for a glow plug, wherein a core of electrically conductive material is surrounded by an insulator layer, which in turn is surrounded by a resistive layer.

EP0950854 concerns a combustion device with a ceramic burner having a plate which can be made by baking particles of fire-resistant, low-expansion ceramic materials, and having an electrically conductive layer coating the plate.

WO2011/088250 discloses a method and an apparatus for electrical control of heat transfer, wherein the heat transfer surface may be covered by an electrical insulator - which could be made of silica glass - and the latter may be covered by an electrically conductive layer.

### OBJECTS OF THE INVENTION

The object of the invention is to propose a component of a gas burner suitable to be mounted on a hob or an item to be placed over and/or in proximity of a gas burner suitable to be mounted on a hob which overcomes, at least in part, the drawbacks of traditional solutions.

Another object of the invention is to propose a component of a gas burner or an item to be placed over and/or in proximity of a gas burner which is easier to produce.

Another object of the invention is to propose a component of a gas burner or an item to be placed over and/or in proximity of a gas burner of low cost.

Another object of the invention is to propose a component of a gas burner or an item to be placed over and/or in proximity of a gas burner which allows to improve the design freedom.

Another object of the invention is to propose a component of a gas burner or an item to be placed over and/or in proximity of a gas burner which has good and proper electrical properties, in particular so as to generate the spark to ignite the gas flame.

Another object of the invention is to propose a component of a gas burner or an item to be placed over and/or in proximity of a gas burner which has a "controlled" breakage, i.e. not shatter into a plurality of small pieces.

Another object of the invention is to propose a component of a gas burner or an item to be placed over and/or in proximity of a gas burner which is more eco-friendly to produce.

Another object of the invention is to propose a component of a gas burner or an item to be placed over and/or in proximity of a gas burner which is lighter.

Another object of the invention is to propose a component of a gas burner that remains cooler when the flames are generated.

Another object of the invention is to propose an item to be placed over and/or in proximity of a gas burner that remains cooler when the flames are generated.

Another object of the invention is to propose a component of a gas burner or an item to be placed over and/or in proximity of a gas burner which has good and proper thermal properties, in particular in terms of thermal stress and thermal shock resistance.

Another object of the invention is to propose a component of a gas burner or an item to be placed over and/or in proximity of a gas burner which has good and proper mechanical properties, in particular in terms of mechanical stability and tolerance.

Another object of the invention is to propose a component of a gas burner or an item to be placed over and/or in proximity of a gas burner which is easy to clean, and which is suitable to be washed in a dishwasher.

Another object of the invention is to propose a component of a gas burner or an item to be placed over and/or in proximity of a gas burner which is made of an alternative material in respect to the known solutions, while having substantially the same mechanical and thermal performances.

Another object of the invention is to propose a component of a gas burner or an item to be placed over and/or in proximity of a gas burner which has a particularly pleasant overall aesthetic effect.

Another object of the invention is to propose a component of a gas burner or an item to be placed over and/or in proximity of a gas burner which is made of an alternative material in respect to the known solutions and which, at the same time, is easy-to-clean, has a pleasant appearance and is simple to manufacture.

Another object of the invention is to propose a component of a gas burner or an item to be placed over and/or in proximity of a gas burner with low materials and productions costs.

Another object of the invention is to propose a component of a gas burner or an item to be placed over and/or in proximity of a gas burner which can be mass-produced quickly and efficiently.

Another object of the invention is to propose a component of a gas burner or an item to be placed over and/or in proximity of a gas burner which has an alternative and/or improved characterization, both in constructive and functional terms, with respect to the traditional ones.

Another object of the invention is to propose a component of a gas burner or an item to be placed over and/or in proximity of a gas burner which is harmless from a health point of view.

Another object of the invention is to propose a component of a gas burner or an item to be placed over and/or in proximity of a gas burner which meets high standards, both functionally and aesthetically, and at the same time has an affordable cost, thus allowing the possibility of its diffusion on a large scale.

### SUMMARY OF THE INVENTION

All these objects, both alone and in any combination thereof, and others which will result from the following description are achieved, according to the invention, with a component of a gas burner or an item to be placed over and/or in proximity of a gas burner with the features of claim 1.

The present invention relates to a component of a gas burner suitable to be mounted on a hob and/or an item to be placed over and/or in proximity of a gas burner suitable to be mounted on a hob, wherein said component and/or item comprises a core of fused silica glass with a coating comprising an electric conductive material.

### Core of fused silica glass

Preferably, said fused silica glass is quartz.

The use of fused silica glass is advantageous since its coefficient of thermal expansion is relatively low and its temperature resistance is relatively high, thus being suitable for thermal shock as expected in the gas burner environment.

Preferably, the core of fused silica glass may be obtained from a fused silica glass powder.

Preferably, the starting material for obtaining the core of fused silica glass may comprise fused silica glass powder mixed with a binder.

Preferably, the starting material may further comprises Titandioxide (TiO2), Chromium (III)nitrate (Cr(NO3)3), Vanadium(III) Chloride (VCI3) for coloring, tetraethoxysilane (Si(OC2H5)4 and also named as TEOS) and/or tetraethylorthotitanate (Ti(OC2H5)4).

Preferably, the binder may be a thermoplastic organic binder. For example, the binder may be selected from polyesters based on aromatic or aliphatic dicarboxylic acids and diols and/or hydroxycarboxylic acids, polycarbonates based on aliphatic or aromatic diols, polyolefins such as polyethylene, polypropylene, polybutene, polymethylpentene, polyisobutene, poly(ethylene-vinyl acetate) (EVA), ethylene propylene rubber (EPR), poly(ethylene propylene diene), poly(vinyl butyral) (PVB), polyacrylates and polymethacrylates, cycloolefin polymers, as well as polyamides, polyacetals such as polyoxymethylene, polyethers such as polyethylene glycol (PEG), including aromatic polyethers based on bisphenols, or polyurethanes, or a combination thereof, without, however, being limited thereto.

Preferably, the organic binder may be a resin which can be hardened upon curing or polymerizing initiated by an external stimulus. In this context, as the external stimulus, heat or irradiation, in particular UV irradiation, may be mentioned. In some cases, mixing may be even sufficient as the external stimulus, e.g. in two-part resins, where the liquid constituents of the resin exhibit a sufficient reactivity towards each other. Further, as required, the external stimulus may include an initiator added to the organic binder for facilitating curing or polymerizing of the organic binder. Suitable initiators are known to the skilled person, such as acetophenones, e.g. 2,2-dimethoxy-2- phenylacetophenone (DMPAP), azo compounds, e.g. azobisisobutyronitrile (AIBN), benzophenone derivatives, fluorescein and its derivatives, e.g. rose bengal, quinones, e.g. camphorquinone, and phosphine derivatives, e.g. diphenyl(2,4,6-trimethylbenzoyl)phosphine oxide, without, however, being limited thereto. Accordingly, curing or polymerizing initiated by the external stimulus turns the liquid constituent(s) of the resin into a solid so that the organic binder is no longer in a moldable state. When exposed to the external stimulus, depending on the resin used, the resin is either cured which leads to a crosslinked structure or it is polymerized which leads to a non-crosslinked structure. In other words, the term "resin" as used herein not only encompasses thermosetting resins but also encompasses thermoplastic resins.

Preferably, the core comprises at least about 5 % by weight of fused silica glass and less than about 90% by weight of binder.

More preferably, the core comprises at least about 30-50% by weight of fused silica glass and at least about 40-50%. by weight of binder.

Ideally, the core comprises about 60% by weight of fused silica glass and about 20% by weight of binder.

Conveniently, the materials in the core may be suitably identified for example by one of the following techniques: X-ray Diffraction (XRD), Scanning/Reflection Electron Microscopy (REM), Energy-Dispersive X-ray Spectroscopy (EDX), Raman Spectroscopy and Nuclear magnetic resonance (NMR) spectroscopy and X-ray Fluorescence (XRF). Conveniently, the binder in the core may be identified with GC-MS.

Preferably, the starting material for obtaining the core of fused silica glass may be liquid (for 3D printing) or solid (for injection molding).

Preferably, the core of fused silica glass may be obtained by 3D-printing process, by injection or casting molding process, and a subsequent sintering to glass.

Preferably, the diameter of the particles of fused silica glass may be typically in the range of about 5 - 500 nm. More preferably, the diameter of the particles of fused silica glass may be typically in the range 2-500 µm.

### Coating

Preferably, the coating has a sheet resistance lower than 10^8 Ohm with a thickness of 1 µm, more preferably lower than 10^6 Ohm with a thickness of 1 µm.

Preferably, the coating has a specific resistivity lower than 100 Ohm·m, more preferably lower than 1 Ohm·m.

Conveniently, the specific resistivity is calculated in the following way:
- removing a part from the coating of the surface of the component/item,
- measuring the sheet resistance R and together with the contact area having length L and width W, and the thickness T, the specific resistivity ρ is calculated as R * T * W / L.

Conveniently, the sheet resistance R may be measured by using various methods that are known to the skilled person in the art, such as for example the four-point measurement. Typically, the reference thickness may be about 25,4 µm, but other thicknesses can be measured as well without restricting the thickness of the applied coating.

A further measurement to be done for gas application is the measurement of an arc, by measuring the voltage (typical range 13-20 kV with a probe suitable for such high voltages). In particular the arc has to be ignited (with typical energies to ignite that are in the range of mJ to J). In addition, the current with current clamp and use a fast-switching oscilloscope, for example one that is suitable to resolve 0,1 ms. Conveniently, such test may be done by using a high voltage probe and an oscilloscope, while the geometry may be determined for example with a high-resolution microscope.

Preferably, said coating has a thermal coefficient of expansion lower than 21 *10^-6/K, more preferably lower than 9*10^-6/K. Conveniently, the combination of thermal coefficient of expansion and of thickness is suitably identified by the skilled person in the art of thin film, see for example: "Review Article: Stress in thin films and coatings: Current status, challenges, and prospects" Grégory Abadias; Eric Chason; Jozef Keckes; Marco Sebastiani; Gregory B. Thompson; Etienne Barthel; Gary L. Doll; Conal E. Murray; Chris H. Stoessel; Ludvik Martinu" in the Journal of Vacuum Science & Technology A 36, 020801 (2018).

Preferably, the thickness of the coating may be below of about 200 µm, more preferably may be below of about 1 µm.

Advantageously, the coating allows to increase the breaking strength and/or to have a controlled breakage (i.e. no shattering into a plurality of small pieces), while at the same time it provides electrical conductivity so as to generate/propagate the spark to ignite the gas flame.

Conveniently, the coating layer may have a thickness that it meets the required mechanical (in terms of breaking strength and/or controlled breakage) and electrical properties (in terms of generation/propagation of the spark for the ignition of the gas flame), while such layer is not destroyed by the different expansion coefficients of the quartz and the layer.

Ideally, the the coating of electric conductive material has a thickness of 50 nm - 20 µm.

Preferably, the coating of electric conductive material comprises a glass coating. Ideally, the coating of electric conductive material comprises a shatterproof glass coating. More preferably, the glass coating is of borosilicate type. Ideally, the glass coating is alkali aluminosilicate glass. Preferably, the coating of electric conductive material comprises a glass-ceramic substrate.

Ideally, the coating of electric conductive material comprises a glass-ceramic substrate, comprising first and second primary surfaces opposing one another and a crystallinity of at least 40% by weight, and an optical film structure disposed on the first primary surface. Preferably, the optical film structure comprises a plurality of alternating high refractive index (RI) and low RI layers and a scratch-resistant layer.

Preferably, the coating is a glass coating known as Gorilla^{®} supplied by Corning^{®}.

Ideally, said glass coating has the following properties:
- Thermal Coefficient of Expansion (0-300°C): 80 - 90 x 10-7/°C, for example 86.9 x 10-7/°C
- Annealing Point: 646°C/ 1135F
- Softening Point: 912°C/ 1565° F
- Strain Point: 596°C /1045° F
- Density: 2.42 g/cm3
- Vickers Hardness: 489 kgf/mm2
- Young's Modulus: 65.8 Gpa
- Poisson's Ratio: 0.22
- Dielectric Constant: E=8.1 MHz @R.T.
- Electrical resistivity: log10 ρ 6.8 at 250° C (482°F) wherein ρ is in Ω.cm Advantageously, this coating is shatterproof.

Preferably, the coating is a glass composition that has electrical conductivity, while having at the same time a low coefficient of thermal expansion.

Preferably, the electric conductive material of the coating comprises transparent conductive oxides (TCO). Ideally, such transparent conductive oxides may be:
- Indium oxide (In2O3:Sn, In2O3:Mo, In2O3:Ti, In2O3:H)
- Zinc oxide (ZnO:Al, ZnO:Ga, ZnO:Ti)
- Tin oxide (SnO2:F, SnO2:Sb, SnO2:Ta, SnO2:Nb)
- Titanium oxide (TiO2:Nb)

Preferably, the transparent conductive oxides (TCO) may be obtained by using one of the following fabrication methods: nebulizer spray pyrolysis (NSP), spray pyrolysis, pulsed laser deposition, thermal evaporation, chemical sol-gel processes, magnetron sputtering, and vapor deposition. More preferably, for industrial-level fabrication, the transparent conductive oxides (TCO) may be obtained by radio frequency (RF) or direct current (DC) magnetron sputtering are the best techniques for, due to their large-area deposition, high deposition rate, and good reproducibility.

Preferably, the glass coating is a glass composition comprising metallic powders or metallic fibers.

Preferably, said component of a gas burner and/or said item may have two superimposed coatings. More in detail, the core of fused silica glass may be provided with a first coating configured to increase the breaking strength and/or to have a controlled breakage and with a second coating configured to provide a suitable electrical conductivity so as to generate/propagate the spark to ignite the gas flame. For example, the first coating may be a glass coating known as Gorilla^{®} supplied by Corning^{®} and the second coating may be of transparent conductive oxides (TCO).

Preferably, between the core of fused silica glass and the external coating of electric conducting material, there is a coating (ideally a transparent coating) configured to enhance the resistance against breakability.

### Colored additive

Preferably, said component of a gas burner and/or said item to be placed over and/or in proximity of a gas burner comprises a colored additive. Preferably, said quartz core of the component and/or item comprises a colored additive. Advantageously, this allows to increase the design options. Preferably, said colored additive is configured so as to maintain its color within the temperature range of room temperature until about 850°C, more preferably until about 1100°C.

Ideally, said colored additive comprises organic or inorganic pigments. For example, said colored additive comprises inorganic pigments supplied by Alfarben. For example, said inorganic pigments can comprise one of the following:
- Chrome antimony titanium buff rutile
- Nickel Antimony Titanium Yellow Rutile
- Bismuth Vanadate,
- Zinc Ferrite
- Cobalt Aluminate Blue Spinel,
- Cobalt Chromite Blue-Green Spinel,
- Black Iron Manganese Oxide
- Chrome Oxide Green
- Red Iron Oxide
- Chromium iron oxide
- Manganese antimony titanium buff rutile
- Copper chromite black spinel

### Thermochromic material

Preferably, said component of a gas burner and/or said item to be placed over and/or in proximity of a gas burner comprises a thermochromic material. Preferably, said quartz core of the component and/or item comprises a thermochromic material. Preferably, said thermochromic material is an additive. Preferably, said thermochromic material is configured to change its optical properties according to the temperature. Preferably, said thermochromic material is configured to change reversibly its optical properties according to the temperature.

Preferably, said optical properties relate to colors. Preferably, said optical properties relate to light reflection and/or light adsorption.

Preferably, said thermochromic material comprises a dye or pigment.

Preferably, said thermochromic material is configured to change its optical properties (colors) within the temperature range of about 50-200°C, more preferably within the temperature range of about 50-100°C, ideally within the temperature range of about 60-80°C. Preferably, said thermochromic material is configured to have an activation temperature of changing its optical properties of about 50 - 60°C.

Preferably, said thermochromic material is configured to maintain a first color at a first temperature that is significantly lower than the temperature of the flames exiting from the gas burner.

Preferably, said thermochromic material comprise thermochromic liquid crystals (TLC).

Preferably, said component of a gas burner and/or said item to be placed over and/or in proximity of a gas burner comprises an additional coating with thermochromic liquid crystals (TLC) that is applied once the core of fused silica glass is ready. For example, such additional coating may be applied at the same step when the coating of electric conductive material is applied.

Preferably, said thermochromic material comprise titanium dioxide (TiO₂).

Preferably, said thermochromic material comprise Zinc oxide (ZnO).

Preferably, said thermochromic material and/or said colored material area added to the mixture during its preparation.

Advantageously, said thermochromic material allows to easily and quickly identify overheating, thus being useful for safety. Moreover, said thermochromic material contributes to a pleasant and distinctive design of the component.

Preferably, said component of a gas burner and/or said item to be placed over and/or in proximity of a gas burner comprises an UV adsorber (stabilizer).

### Component types

Preferably, the component of the gas burner is a cover (also called "lid" or "cap"), that is a piece that - together with an underlying base - defines a chamber for mixing and/or distributing the air-gas mixture.

Preferably, the cover may have any shape or dimensions of the known gas burner. For example, the cover may be disk-shaped, ring-shaped, plate-shaped, or with an elongated shape, flat or concave.

Preferably, the component of the gas burner is a base on which the cover is positioned. Preferably, said base is configured to act as flames spreader.

Preferably, the component of the gas burner is an injector holder, that is a component on which at least one injector is mounted.

Ideally, the openings for the exiting of flames are defined on the base and/or on the cover.

Preferably, said item to be placed over and/or in proximity of a gas burner comprises a support for a pan or cooking vessel. Ideally, said item is grid shaped. Ideally, said item comprises at least one supporting arm.

Preferably, said component of a gas burner and/or said item to be placed over and/or in proximity of a gas burner comprises the encapsulation of the thermochromic material in a polymeric matrix.

Preferably, said component of a gas burner and/or said item to be placed over and/or in proximity of a gas burner comprises an age resistant binder.

Advantageously, the cover is not provided with an enameling coating.

Advantageously, the cover is not made of casting iron.

The present invention also relates to a gas burner having at least one component with one or more of the above-mentioned features. Preferably, the gas burner has a cover with one or more of the above-mentioned features.

### Method

The present invention also relates to a method for manufacturing a component of a gas burner and/or an item to be placed over and/or in proximity of a gas burner, characterized in that it comprises the following steps:
- mixing the starting materials, wherein said starting materials comprise fused silica glass powder and a binder, thus obtaining a mixture,
- shaping the mixture so as to define a shaped part that substantially corresponds to the final shape of the component or item to be manufactured,
- sintering the shaped part,
- applying the coating on the shaped part, thus obtaining said component or item.

Advantageously, the shape of the component or item so obtained is fully retained and the shrinkage is isotropic.

Preferably, if the mixture is solid, the shaping is made by injection molding. Ideally, for the injection molding it is used an injection molding machine at about 130°C with cycle times of a few seconds.

Preferably, if the mixture is liquid, the shaping is made 3D printing or casting on molds.

Preferably, before sintering, there is a drying phase. More preferably, said drying phase is performed by heating. Ideally, the heating is performed by oven or IR radiation, UV radiation, microwave. For example, the shaped part is processed in a oven at about 600°C to remove the binder.

Preferably, the sintering phase is performed at about 1300°C.

### DESCRIPTION OF THE FIGURES

The present invention is hereinafter further clarified in some of its preferred embodiments shown for purely exemplifying and non-limiting purposes with reference to the accompanying drawings, in which:
- Figure 1A: shows an exploded perspective view of a burner according to the invention in a first embodiment,
- Figure 1B: shows a perspective view of the assembled burner of Fig. 1A,
- Figure 2A: shows an exploded perspective view of a burner according to the invention in a second embodiment,
- Figure 2B: shows a perspective view of the assembled burner of Fig. 2A,
- Figure 3A: shows an exploded perspective view of a burner according to the invention in a third embodiment,
- Figure 3B: shows a perspective view of the assembled burner of Fig. 3A,
- Figure 4A: shows an exploded perspective view of a burner according to the invention in a fourth embodiment,
- Figure 4B: shows a perspective view of the assembled burner of Fig. 4A,
- Figure 5A: shows an exploded perspective view of a burner according to the invention in a fifth embodiment,
- Figure 5B: shows a perspective view of the assembled burner of Fig. 5A.

### DETAILED DESCRIPTION OF THE INVENTION AND OF ITS PREFERRED AND EXEMPLARY EMBODIMENTS

The present invention relates to a component - that is indicated with the reference number "10" - of a gas burner 2 and/or an item to be placed over and/or in proximity of a gas burner 2, wherein said component and/or item comprises a core of fused silica glass with a coating comprising an electric conductive material.

Preferably, said fused silica glass is quartz.

For example, the core of fused silica glass may be obtained according to the teachings, compositions and recipes disclosed in one or more of the following documents US10954155, WO2022/053632, WO2022/200627 and/or WO2022/200629, wherein the content of each document is intended to be here incorporated by reference.

Advantageously, the fused silica glass has a better thermal shock resistance than transparent ceramics.

Preferably, the component 10 and/or item comprises a mixture of fused silica glass powder with a binder.

Preferably, the starting material for obtaining the core of fused silica glass may be liquid (for 3D printing) or solid (for injection molding).

Preferably, the coating has a sheet resistance lower than 10^8 Ohm with a thickness of 1 µm, preferably lower than 10^6 Ohm with a thickness of 1 µm.

Preferably, the coating has a thermal coefficient of expansion lower than about 21*10^-6/K, more preferably lower than 9*10^-6/K.

Preferably, the coating is a glass-ceramic composition made according to WO2022/212464, the content of which is intended to be here incorporated by reference.

For example, the glass coating is a glass composition supplied by Corning. More in detail, the glass coating may comprise a glass composition known by the trade name "Gorilla Glass Victus 2"

For example, the glass coating is a glass composition supplied by the japanese company Asahi Glass Corporation (AGC). More in detail, the glass coating may comprise a glass composition known by the trade name "Dragontrail".

Preferably, the component 10 according to the invention is a component of a gas burner 2 to be mounted on a hob, preferably on a built-in hob. Conveniently, the burner 2 is suitable for heating pans or, in general, cooking utensils (such as, for example, plates, grills, grill pans, saucepans, etc.).

Conveniently, the gas burner 2 may have a single group of flames or multiple (i.e. two, three or more) groups of flames. Conveniently, the gas burner 2 may have also a simmering flame.

Conveniently, the gas burner 2 may be configured to intake the primary air from above the cooking hob and/or from below the cooking hob.

Conveniently, the gas burner 2 may be provided with a spark igniter 18 and/or a thermocouple 20 or may be without them.

As can be seen from the figures, the component 10 according to the invention of the gas burner 2 may be a cover 8 (also called "lid" or "cap") and/or a base 4 and/or an injector(s) holder 6 of said gas burner 2, wherein the cover 8 is the component on the top of the gas burner 2 and is positioned above the base 4 that, in turn, is positioned on the injector(s) holder 6 that is the component on which at least one injector is mounted.

Conveniently, the components 10 according to the invention are defined by the covers 8 of the gas burner 2.

Preferably, said cover 8 may be configured to define with the base 4 at least one chamber 40 for mixing and/or distributing the air-gas mixture.

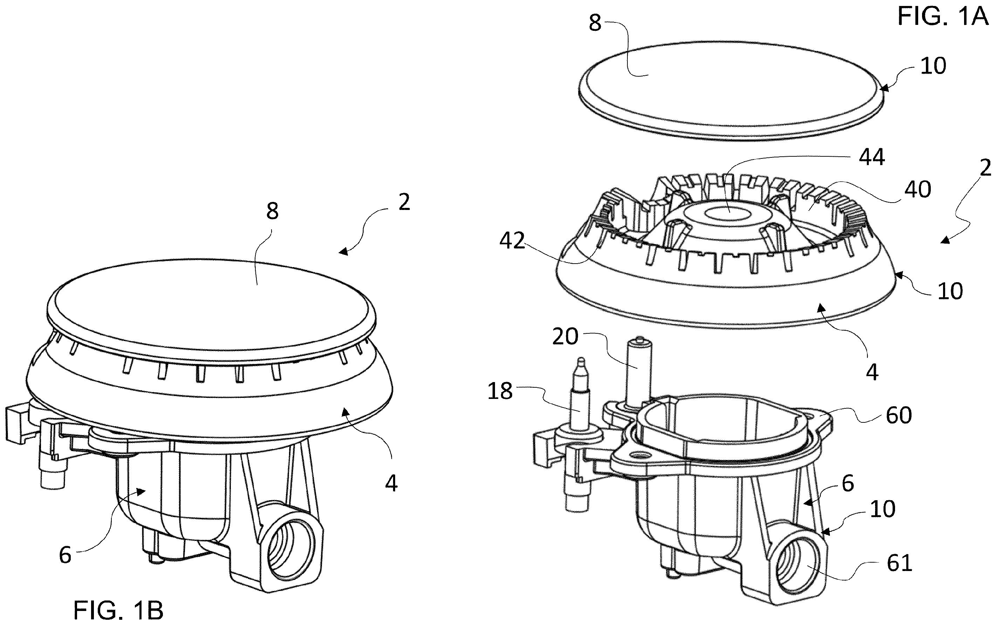

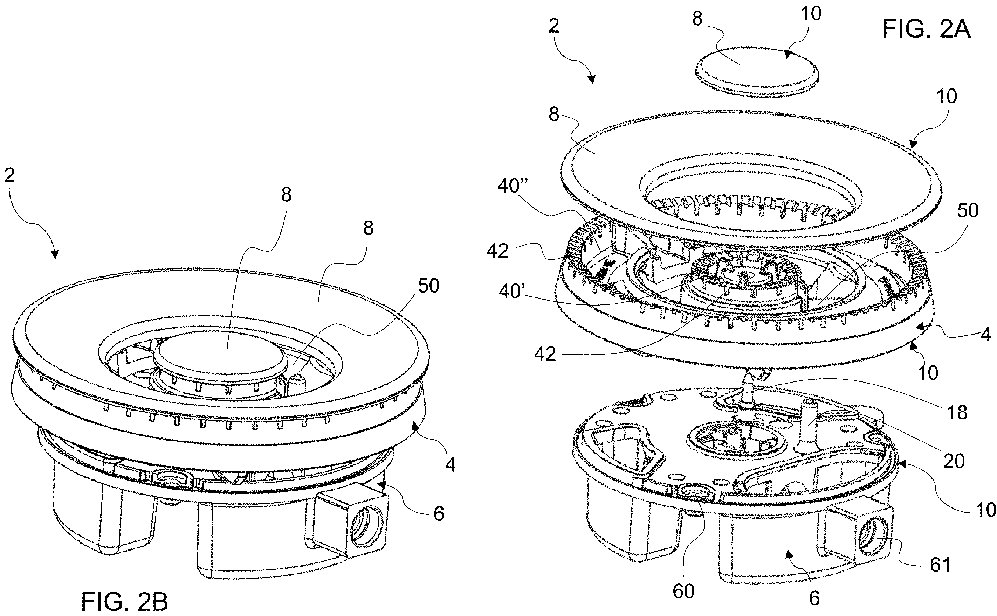

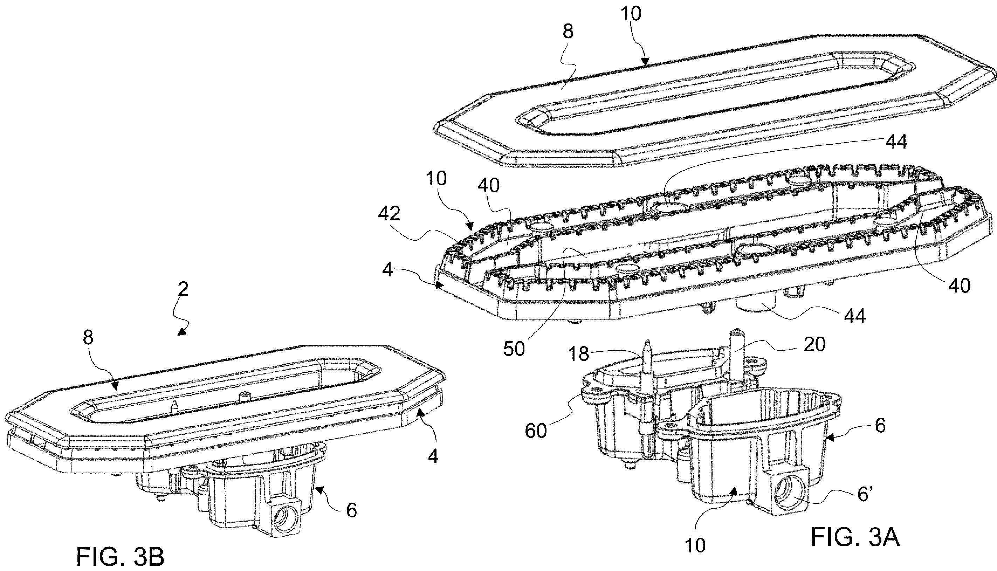

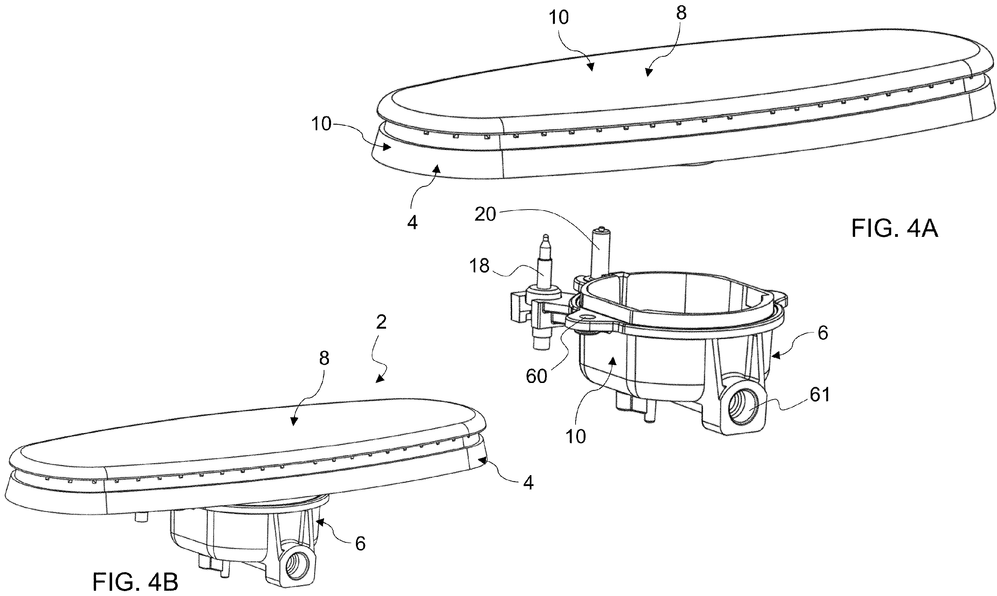

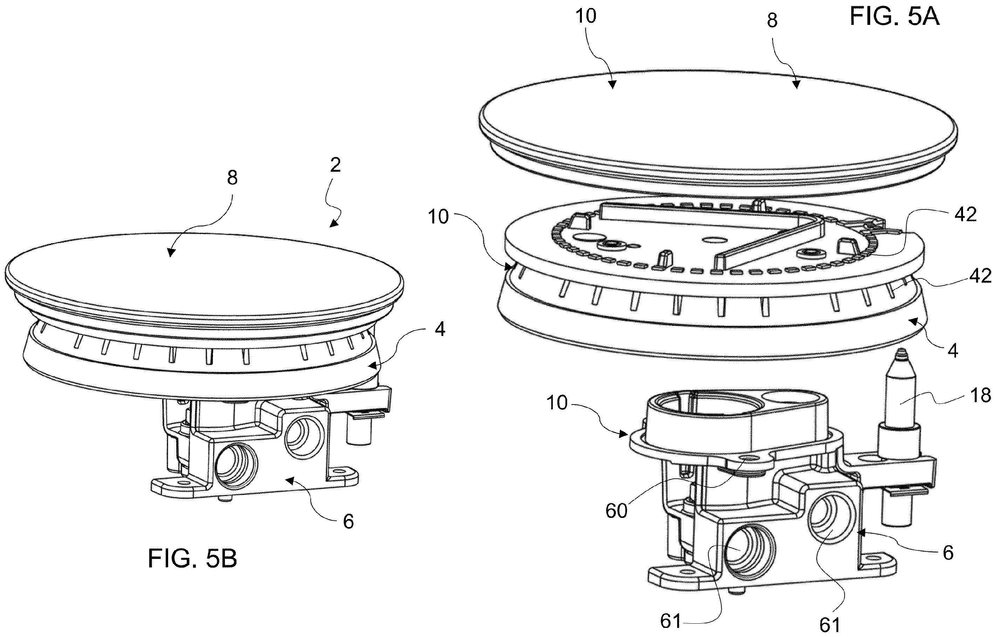

Preferably, the cover 8 may be (according to a plan view) disk-shaped (see for example the embodiments of figure 1A, 1B and 5A, 5B), ring-shaped (see for example the embodiments of figure 2A, 2B), plate-shaped, or with an elongated shape (see for example the embodiments of figure 4A, 4B), with an ring-elongated shape (see for example the embodiments of figure 3A, 3B). Preferably, the cover 8 may be flat or concave. Conveniently, the cover 8 has two dimensions (length and width) that are quite larger that the third dimension (thickness).

Preferably, the base 4 - and in particular at least one distribution chamber 40 defined in the base 4 - may be (according to a plan view) disk-shaped, ring-shaped, with an elongated shape or with a ring-elongated shape.

Preferably, the base 4 may be provided with one or more ducts 44 for transferring the air-gas mixture to a corresponding distribution chamber 40 that may be defined in the same base or that is closed on the top by the cover 8. Conveniently, the base 4 may comprise one or more pieces.

Preferably, the base 4 may act as a flame spreader. In particular, the base 4 may be provided with openings 42 for the exiting of the flames.

Conveniently, in other possible embodiments, the division of the flames is performed by the cover, and not by the base 4, and in this case corresponding opening may be defined on the cover. Conveniently, in other possible embodiments, the division of the flames is performed by the cooperation of the cover 8 with the base 4.

Preferably, the gas burner 2 may comprise at least one linear Venturi channel. Conveniently, said at least one linear Venturi channel may be aligned substantially horizontally or vertically. Conveniently, said at least one linear Venturi channel may be defined inside the base 4 or inside the injector (s) holder 6 or by positioning the base 4 on the injector (s) holder 6.

Preferably, the gas burner 2 may comprise at least one radial Venturi. Conveniently, said at least one radial Venturi channel may comprise at least one duct exiting on a chamber so as to cause a radial Venturi effect. Conveniently, said at least one duct and chamber may be both defined inside the base 4. Conveniently, said at least one duct may be defined in the base 4 while the chamber is defined by positioning the cover 8 on the base 4.

Conveniently, the gas burner 2 (see for example embodiment of figures 2A, 2B) may comprise an annular cavity 50 for separating an inner central distribution chamber 40' and an external annular distribution chamber 40".

Conveniently, the gas burner 2 (see for example embodiment of figures 3A, 3B) may comprise an inner cavity 50 surrounded by an annular distribution chamber 40 that may be divided in two symmetrical branches.

Preferably, the gas burner 2 consists exclusively of the base 4, the injector(s) holder 6 and the cover 8.

Preferably, the injector(s) holder 6 is provided with means 60 for its fastening to the hob. Conveniently, on the injector(s) holder 6 is mounted at least one injector, that can be vertically or horizontally aligned and that is fluidically connected with one or more gas supply inlets 61.

Preferably, the injector(s) holder 6 may comprise at least one concave piece defining at least one well or cup wherein at least one injector is installed. Conveniently, the injector(s) holder 6 may be (according to a plan view) disk-shaped or with an elongated shape. Conveniently, within the injector(s) holder 6 may be defined (or housed) one or more cavities and one or more ducts or Venturi ducts.

The operation of the gas burner 2 according to the invention is traditional. In particular, the gas, which arrives in the injector(s) holder 6 from a gas supply inlet 61, exits from each injector and is mixed with the primary air drawn from above and/or below the cooking hob. The flow of gas - primary air mixture reaches then a distribution chamber for feeding a corresponding flame of group of flames.

The gas burner 2 may be for example of small size and with a single ring of flame (see figures 1A and 1B), may be of the type having high burning power and with two concentrical groups of flames (see figures 2A and 2B), may be of elongated type with an inner and an external group of flames (see figures 3A and 3B), may be of elongated type with a single external group of flames (see figures 4A and 4B) and may be with two groups of flames that are superimposed on each other (see figures 5A and 5B).

Conveniently, the item according to the invention to be placed over and/or in proximity of the gas burner may be a support for a pan or a cooking vessel. Preferably, said item may be grid shaped and/or may comprise at least one supporting arm.

In the following, some examples are provided of the starting mixture and of the composition in a component 10 - according to the invention - of the gas burner 2 and/or in the item - according to the invention - to be placed over and/or in proximity of the gas burner.

Conveniently, the materials in the component 10 and/or item according to the invention, may be suitably identified by one of the following techniques: X-ray Diffraction (XRD), Scanning/Reflection Electron Microscopy (REM), Energy-Dispersive X-ray Spectroscopy (EDX), Raman Spectroscopy, Nuclear magnetic resonance (NMR) spectroscopy and X-ray Fluorescence (XRF).

### Example 1

In a first example, the core of the component 10 of the gas burner 2 and/or the item to be placed over and/or in proximity of a gas burner 2 is obtained by mixing about 40-60 % by weight of fused silica glass powder and about 40-60 % by weight of a binder. The fused silica is of the particle size of about 5-500 nm.

On the core so obtained it is then a applied a glass coating comprising a glass composition known by the trade name "Gorilla Glass Victus 2".

### Example 2

In a second example, the core of the component 10 of the gas burner 2 and/or the item to be placed over and/or in proximity of a gas burner 2 is obtained by mixing about 70-80 % by weight of fused silica glass powder and about 20 - 30% by weight of a binder defined by poly(venyl butyral).

On the core so obtained it is then a applied a glass coating comprising a glass composition known by the trade name "Dragontrail" supplied by the Japanese company Asahi Glass Corporation (AGC).

### Example 3

In a second example, the core of the component 10 of the gas burner 2 and/or the item to be placed over and/or in proximity of a gas burner 2 is obtained by mixing about 50-70 % by weight of fused silica glass powder and about 20 - 30% by weight of a binder defined by EVA copolymer (poly(ethylene-vinyl acetate)) or polypropylene.

On the core so obtained it is then a applied a glass coating comprising a transparent conductive oxides (TCO) and, in particular, Indium oxide (In2O3:Sn, In2O3:Mo, In2O3:Ti, In2O3:H).

### Example 4

In a fourth example, the core of the component 10 of the gas burner 2 and/or the item to be placed over and/or in proximity of a gas burner 2 is obtained by mixing about 50-70 % by weight of fused silica glass powder and about 20 - 30% by weight of a binder defined by an acrylic resin.

On the core so obtained it is then a applied a glass coating comprising a glass composition known by the trade name "Gorilla Glass Victus 2"

Preferably, said glass coating further comprises about 0,1-5 % by weight of colored additive.

Preferably, said colored additive comprises inorganic pigments. For example, said colored additive comprises inorganic pigments supplied by Alfarben. For example, said inorganic pigments can comprise one of the following:
- Chrome antimony titanium buff rutile
- Nickel Antimony Titanium Yellow Rutile
- Bismuth Vanadate,
- Zinc Ferrite
- Cobalt Aluminate Blue Spinel,
- Cobalt Chromite Blue-Green Spinel,
- Black Iron Manganese Oxide
- Chrome Oxide Green
- Red Iron Oxide
- Chromium iron oxide
- Manganese antimony titanium buff rutile
- Copper chromite black spinel

Preferably, said colored additive may be a thermochromic material.

### Example 5

In a fifth example, the core of the component 10 of the gas burner 2 and/or the item to be placed over and/or in proximity of a gas burner 2 is obtained by mixing about 50-70% by weight of fused silica glass powder and about 20 - 30% by weight of a binder defined by EVA copolymer (poly(ethylene-vinyl acetate)) or polypropylene. On the core so obtained it is then a applied a first glass coating to stabilize the component mechanically, for example it is a glass composition known by the trade name "Gorilla Glass Victus 2". In a further step another (second) coating is applied comprising a transparent conductive oxides (TCO) and, in particular, Indium oxide (In2O3:Sn, In2O3:Mo, In2O3:Ti, In2O3:H). This coating might be applied using thermal evaporation process.

### Example 6

In a sixth example, the core of the component 10 of the gas burner 2 and/or the item to be placed over and/or in proximity of a gas burner 2 is obtained by mixing about 50-70 % by weight of fused silica glass powder and about 20 - 30% by weight of a binder defined by EVA copolymer (poly(ethylene-vinyl acetate)) or polypropylene.

On the core so obtained it is then a applied a first glass coating to stabilize the component mechanically, for example it is a glass composition known by the trade name "Gorilla Glass Victus 2". In a further step another (second) coating is applied comprising a transparent conductive oxides (TCO) and, in particular, Indium oxide (In2O3:Sn, In2O3:Mo, In2O3:Ti, In2O3:H). This coating may be applied using thermal evaporation process. In a further additional step, a thermochromic color is printed on a part of the component which is intended to stay colder than 260°C.

Advantageously, a suitable electronic device with an optical sensor may be used to detect the color change of this part and to use such detection for control and/or monitoring.

### ADVANTAGES

From what has been said it is clear that the solution according to the invention is somewhat more advantageous than the traditional ones, and in particular:
- the design options are increased
- is highly resistant to thermal shocks,
- has a controlled breakage,
- has a very good electrical conductivity,
- is no hazardous to health
- is high-temperature resistant and has optimum thermal insulating properties,
- has very good mechanical strength,
- is mechanically and dimensionally stable over a wide range of temperature,
- is low in weight, thus also allowing a reduction of the transportation costs,
- is aesthetically pleasant,
- is easy to clean,
- has a long service life,
- is safer.

The present invention has been illustrated and described in some of its preferred embodiments, but it is understood that executive variants can be applied to them in practice, without however departing from the scope of protection of the present patent for industrial invention.

In the preceding discussion of the invention, unless stated to the contrary, the disclosure of alternative values for the upper or lower limit of the permitted range of a parameter, coupled with an indication that one of the values is more highly preferred than the other, is to be construed as an implied statement that each intermediate value of the parameter, lying between the more preferred and the less preferred of the alternatives, is itself preferred to the less preferred value and also to each value lying between the less preferred value and the intermediate value.

The features disclosed in the foregoing description or the following drawings, expressed in their specific forms or in terms of a means for performing a disclosed function, or a method or a process of attaining the disclosed result, as appropriate, may separately, or in any combination of such features be utilized for realizing the invention in diverse forms thereof.

## Claims

1. Component (10) of a gas burner (2) suitable to be mounted on a hob or an item to be placed over and/or in proximity of a gas burner (2) suitable to be mounted on a hob, wherein said component (10) and/or item comprises a core of fused silica glass and at least one coating comprising an electric conductive material.

2. Component or item according to claim 1, **characterized in that** said fused silica glass is quartz.

3. Component or item according to one or more of the preceding claims, **characterized in that** the core of fused silica glass is obtained by a fused silica glass powder mixed with a binder.

4. Component or item according to one or more of the preceding claims, **characterized in that** the core of fused silica glass is obtained by 3D-printing process, by injection or casting molding process, and a subsequent sintering to glass.

5. Component or item according to one or more of the preceding claims, **characterized in that** the coating has a sheet resistance lower than 10^8 Ohm with a thickness of 1 µm, preferably lower than 10^6 Ohm with a thickness of 1 µm.

6. Component or item according to one or more of the preceding claims, **characterized in that** the coating has a thermal coefficient of expansion lower than 21*10^-6/K, preferably lower than 9*10^-6/K.

7. Component or item according to one or more of the preceding claims, **characterized in that** the electric conductive material of said at least one coating comprises:
- a glass coating, preferably of borosilicate type, and/or
- transparent conductive oxides (TCO).

8. Component or item according to one or more of the preceding claims, **characterized in that** it comprises a first coating configured to increase the breaking strength and/or to have a controlled breakage and a second coating configured to provide a suitable electrical conductivity so as to generate/propagate the spark to ignite the gas flame.

9. Component or item according to one or more of the preceding claims, **characterized in that** it also comprises a colored additive.

10. Component or item according to one or more of the preceding claims, **characterized in that** it also comprises a thermochromic material configured to change its optical properties according to the temperature.

11. Component according to one or more of the preceding claims, **characterized in that** said component is shaped as a cover (8) of a gas burner (2) wherein said cover (8) is the component on the top of said gas burner (2).

12. Component according to one or more of the preceding claims, **characterized in that** said component is shaped as a base (4) and/or as an injector(s) holder (6) of a gas burner (2), wherein:
- the base (4) is the component of the gas burner that is positioned on the injector(s) holder (6), and
- said base (4) is closed on its top by a cover (8) that is positioned above said base (4).

13. Method for manufacturing a component (10) of a gas burner (2) and/or an item, to be placed over and/or in proximity of a gas burner, according to one or more of the preceding claims, wherein it comprises the following steps:
- mixing the starting materials, wherein said starting materials comprise fused silica glass powder and a binder, thus obtaining a mixture,
- shaping the mixture so as to define a shaped part that substantially corresponds to the final shape of the component or item to be manufactured,
- sintering the shaped part, thus obtaining the core of said component or item,
- applying the coating on the shaped part thus obtaining said component or item.

14. Method according to the previous claim, **characterized in that** before sintering, there is a drying phase, preferably performed by heating.

15. Gas burner (2) suitable to be mounted on a hob, preferably on a built-in hob, **characterized in that** it comprises at least one component according to one or more of the preceding claims.

## Patentansprüche

1. Bauteil (10) eines Gasbrenners (2), der geeignet ist, auf einem Kochfeld eingebaut zu werden, oder ein Gegenstand, der über und/oder in der Nähe eines Gasbrenners (2), der geeignet ist, auf einem Kochfeld eingebaut zu werden, angeordnet werden kann, wobei das Bauteil (10) und/oder der Gegenstand einen Kern aus Quarzglas und mindestens eine Beschichtung umfassend ein elektrisch leitfähiges Material umfasst.

2. Bauteil oder Gegenstand nach Anspruch 1, **dadurch gekennzeichnet, dass** das Quarzglas Quarz ist.

3. Bauteil oder Gegenstand nach einem oder mehreren der vorhergehenden Ansprüche, **dadurch gekennzeichnet, dass** der Kern aus Quarzglas durch ein Quarzglaspulver, das mit einem Bindemittel gemischt wird, erhalten wird.

4. Bauteil oder Gegenstand nach einem oder mehreren der vorhergehenden Ansprüche, **dadurch gekennzeichnet, dass** der Kern aus Quarzglas durch ein 3D-Druckverfahren, durch ein Spritzguss-oder Gießformverfahren und ein anschließendes Sintern zu Glas erhalten wird.

5. Bauteil oder Gegenstand nach einem oder mehreren der vorhergehenden Ansprüche, **dadurch gekennzeichnet, dass** die Beschichtung einen Schichtwiderstand aufweist, der niedriger als 10^8 Ohm mit einer Dicke von 1 µm, vorzugsweise niedriger als 10^6 Ohm mit einer Dicke von 1 µm ist.

6. Bauteil oder Gegenstand nach einem oder mehreren der vorhergehenden Ansprüche, **dadurch gekennzeichnet, dass** die Beschichtung einen thermischen Ausdehnungskoeffizienten aufweist, der niedriger als 21*10^-6/K, vorzugsweise niedriger als 9*10^-6/K ist.

7. Bauteil oder Gegenstand nach einem oder mehreren der vorhergehenden Ansprüche, **dadurch gekennzeichnet, dass** das elektrisch leitfähige Material der mindestens einen Beschichtung umfasst:
- eine Glasbeschichtung, vorzugsweise aus Borosilikat-Typ, und/oder
- transparente leitfähige Oxide (TCO).

8. Bauteil oder Gegenstand nach einem oder mehreren der vorhergehenden Ansprüche, **dadurch gekennzeichnet, dass** es/er eine erste Beschichtung umfasst, die dazu konfiguriert ist, die Bruchfestigkeit zu erhöhen und/oder ein kontrolliertes Brechen zu haben, sowie eine zweite Beschichtung, die dazu konfiguriert ist, eine geeignete elektrische Leitfähigkeit bereitzustellen, um den Funke zur Zündung der Gasflamme zu erzeugen/zu verbreiten.

9. Bauteil oder Gegenstand nach einem oder mehreren der vorhergehenden Ansprüche, **dadurch gekennzeichnet, dass** es/er zudem einen Farbzusatzstoff umfasst.

10. Bauteil oder Gegenstand nach einem oder mehreren der vorhergehenden Ansprüche, **dadurch gekennzeichnet, dass** es/er ferner ein thermochromes Material umfasst, das dazu konfiguriert ist, seine optischen Eigenschaften nach der Temperatur zu ändern.

11. Bauteil nach einem oder mehreren der vorhergehenden Ansprüche, **dadurch gekennzeichnet, dass** das Bauteil als eine Abdeckung (8) eines Gasbrenners (2) ausgebildet ist, wobei die Abdeckung (8) das Bauteil auf der Oberseite des Gasbrenners (2) ist.

12. Bauteil nach einem oder mehreren der vorhergehenden Ansprüche, **dadurch gekennzeichnet, dass** das Bauteil als eine Basis (4) und/oder als Injektorhalter (6) eines Gasbrenners (2) ausgebildet ist, wobei:
- die Basis (4) das Bauteil des Gasbrenners ist, das auf dem Injektorhalter (6) angeordnet ist, und
- die Basis (4) an seiner Oberseite durch eine Abdeckung (8) verschlossen wird, die über der Basis (4) angeordnet ist.

13. Verfahren zur Herstellung eines Bauteils (10) eines Gasbrenners (2) und/oder eines Gegenstands, der über und/oder in der Nähe eines Gasbrenners angeordnet werden kann, nach einem oder mehreren der vorhergehenden Ansprüche, wobei es die folgenden Schritte umfasst:
- Mischen der Ausgangsmaterialien, wobei die Ausgangsmaterialien Quarzglaspulver und ein Bindemittel umfassen, wodurch eine Mischung erhalten wird,
- Formen der Mischung, um ein Formteil zu definieren, das im Wesentlichen der Endform des herzustellenden Bauteils oder Gegenstands entspricht,
- Sintern des Formteils, wodurch der Kern des Bauteils oder Gegenstands erhalten wird,
- Aufbringen der Beschichtung auf das Formteil, wodurch das Bauteil oder der Gegenstand erhalten wird.

14. Verfahren nach dem vorhergehenden Anspruch, **dadurch gekennzeichnet, dass** eine Trocknungsphase vor dem Sintern stattfindet, die vorzugsweise durch Erhitzen durchgeführt wird.

15. Gasbrenner (2), der geeignet ist, auf einem Kochfeld, vorzugsweise auf einem Einbaukochfeld eingebaut zu werden, **dadurch gekennzeichnet, dass** er mindestens ein Bauteil nach einem oder mehreren der vorhergehenden Ansprüche umfasst.

## Revendications

1. Composant (10) d'un brûleur à gaz (2) approprié à être monté sur une plaque de cuisson, ou article approprié à être placé au-dessus et/ou à proximité d'un brûleur à gaz (2) destiné à être monté sur une plaque de cuisson, dans lequel ledit composant (10) et/ou ledit élément comprend un noyau en verre de silice fondue et au moins un revêtement comprenant un matériau électriquement conducteur.

2. Composant ou article selon la revendication 1, **caractérisé en ce que** ledit verre de silice fondue est du quartz.

3. Composant ou article selon une ou plusieurs des revendications précédentes, **caractérisé en ce que** le noyau en verre de silice fondue est obtenu à partir d'une poudre de verre de silice fondue mélangée à un liant.

4. Composant ou article selon une ou plusieurs des revendications précédentes, **caractérisé en ce que** le noyau en verre de silice fondue est obtenu par un procédé d'impression 3D, par un procédé de moulage par injection ou par coulée, et un frittage ultérieur pour obtenir du verre.

5. Composant ou article selon une ou plusieurs des revendications précédentes, **caractérisé en ce que** le revêtement présente une résistance de surface inférieure à 10⁸ ohm pour une épaisseur de 1 µm, de préférence inférieure à 10⁶ ohm pour une épaisseur de 1 µm.

6. Composant ou article selon une ou plusieurs des revendications précédentes, **caractérisé en ce que** le revêtement présente un coefficient de dilatation thermique inférieur à 21 × 10⁻⁶/K, de préférence inférieur à 9 × 10⁻⁶/K.

7. Composant ou article selon une ou plusieurs des revendications précédentes, **caractérisé en ce que** le matériau électriquement conducteur dudit au moins un revêtement comprend :
- un revêtement en verre, de préférence de type borosilicate, et/ou
- des oxydes conducteurs transparents (TCO).

8. Composant ou élément selon une ou plusieurs des revendications précédentes, **caractérisé en ce qu'**il comprend un premier revêtement configuré pour augmenter la résistance à la rupture et/ou pour présenter une rupture contrôlée, et un second revêtement configuré pour fournir une conductivité électrique appropriée de manière à générer/propager l'étincelle destinée à allumer la flamme de gaz.

9. Composant ou article selon une ou plusieurs des revendications précédentes, **caractérisé en ce qu'**il comprend également un additif coloré.

10. Composant ou article selon une ou plusieurs des revendications précédentes, **caractérisé en ce qu'**il comprend également un matériau thermochromique configuré pour changer ses propriétés optiques en fonction de la température.

11. Composant selon une ou plusieurs des revendications précédentes, **caractérisé en ce que** ledit composant se présente sous la forme d'un couvercle (8) d'un brûleur à gaz (2), dans lequel ledit couvercle (8) est le composant sur le dessus dudit brûleur à gaz (2).

12. Composant selon une ou plusieurs des revendications précédentes, **caractérisé en ce que** ledit composant se présente sous la forme d'une base (4) et/ou d'un porte-injecteur(s) (6) d'un brûleur à gaz (2), dans lequel :
- la base (4) est le composant du brûleur à gaz qui est positionné sur le porte-injecteur(s) (6), et
- ladite base (4) est fermée sur son dessus par un couvercle (8) qui est positionné au-dessus de ladite base (4).

13. Procédé de fabrication d'un composant (10) d'un brûleur à gaz (2) et/ou d'un article, destiné à être placé au-dessus et/ou à proximité d'un brûleur à gaz, selon une ou plusieurs des revendications précédentes, dans lequel il comprend les étapes suivantes :
- le mélange des matières premières, dans lequel lesdites matières premières comprennent de la poudre de verre de silice fondue et un liant, en obtenant ainsi un mélange,
- le façonnage du mélange de manière à définir une pièce façonnée qui correspond sensiblement à la forme finale du composant ou de l'article à fabriquer,
- le frittage de la pièce façonnée, ce qui permet d'obtenir le noyau dudit composant ou article,
- l'application du revêtement sur la pièce façonnée en obtenant ainsi ledit composant ou article.

14. Procédé selon la revendication précédente, **caractérisé en ce qu'**avant le frittage, il existe une phase de séchage, réalisée de préférence par chauffage.

15. Brûleur à gaz (2) approprié pour être monté sur une plaque de cuisson, de préférence sur une plaque de cuisson intégrée, **caractérisé en ce qu'**il comprend au moins un composant selon l'une ou plusieurs des revendications précédentes.
